# EUROPEAN PATENT APPLICATION

(11) **EP 4 458 555 A1**
(43) Date of publication of application: **06.11.2024**
(21) Application number: 23757500.6
(22) Date of filing: 30.05.2023
(51) Int. Cl.: B29C 64/343, B29C 64/245, B29C 64/124, B29C 64/393, B33Y 10/00, B33Y 30/00, B33Y 40/00, B33Y 50/02

(54) **DETECTION METHOD FOR REMAINING AMOUNT OF PRINTING MATERIAL, AND ADDITIVE MANUFACTURING DEVICE AND READABLE STORAGE MEDIUM**

(30) Priority: 17.03.2023 CN 202310284554
(71) Applicant: Shenzhen Anycubic Technology Co., Ltd., Shenzhen, Guangdong 518000 (CN)
(72) Inventor: DENG, Xingiao, Shenzhen, Guangdong 518000 (CN)
(74) Representative: Haseltine Lake Kempner LLP
(86) International application number: PCT/CN2023/097057
(87) International publication number: WO 2024/192879

(57) **Abstract**

A remaining printing material measurement method, an additive manufacturing apparatus, and a readable storage medium are provided. The remaining printing material measurement method is applied to the additive manufacturing apparatus. The measurement method allows for determining whether the remaining printing material in a resin vat is enough to complete the printing of a model to be printed before printing or during printing, which is beneficial to promote a user to add the printing material when the printing material in the resin vat is insufficient, so as to avoid printing delay or interruption caused by not adding printing materials in time and greatly increase the operation efficiency.

## Description

### TECHNICAL FIELD

The present application relates to the technical field of three-dimensional (3D) printing, and particularly relates to a remaining printing material measurement method, an additive manufacturing apparatus, and a readable storage medium.

### BACKGROUND

At present, ultraviolet light is often used for an existing light-curing additive manufacturing apparatus to irradiate a photosensitive resin consumable in a resin vat for curing by exposure, so as to achieve additive manufacturing. However, in the existing light-curing additive manufacturing apparatus, a remaining printing material in the resin vat is not measured during operation, or it is unable to accurately and reliably determine whether the remaining printing material in the resin vat is sufficient due to a high complexity of a measurement device, which may even lead to printing interruptions due to untimely replenishment, thereby affecting the printing efficiency.

Therefore, how to avoid the problem of low printing efficiency caused by the inability to accurately determine whether the remaining printing material is sufficient in the resin vat is an urgent technical issue that needs to be solved.

### SUMMARY

An objective of the present invention is to provide a remaining printing material measurement method, an additive manufacturing apparatus, and a readable storage medium, which can accurately determine whether the remaining printing material in a resin vat is sufficient and further increase the printing efficiency.

In order to achieve the above objective, the present invention provides a remaining printing material measurement method applied to an additive manufacturing apparatus. The additive manufacturing apparatus includes a resin vat and a printing platform movable relative to the resin vat. The remaining printing material measurement method includes: controlling a printing platform to move towards a resin vat, and obtaining a first measurement value for representing a force on the printing platform during the movement of the printing platform towards the resin vat; determining a current position of the printing platform as a first target position when the first measurement value reaches a first preset condition; and determining the remaining printing material in the resin vat from the first target position.

The present invention provides an additive manufacturing apparatus, including: a memory configured to store a computer program; and a processor configured to, when executing the computer program, carry out the steps of the remaining printing material measurement method of any one of the above items. The present invention provides a readable storage medium storing a computer program thereon, wherein the computer program, when being executed by a processor, carries out the steps of the remaining printing material measurement method of any one of the above items.

With respect to the background, the remaining printing material measurement method provided in the embodiments of the present invention is applied to the additive manufacturing apparatus. The additive manufacturing apparatus includes a resin vat and a printing platform. During printing, the printing platform can move relative to the resin vat. Specifically, in the remaining printing material measurement method according to the present invention, the printing platform is first controlled to move towards the resin vat, and the first measurement value for representing the force on the printing platform is obtained during the movement of the printing platform towards the resin vat, then the current position of the printing platform is determined as the first target position when the first measurement value reaches the first preset condition, and finally the remaining printing material in the resin vat is determined from the first target position. The remaining printing material measurement method allows for directly determining the current remaining printing material in the resin vat by means of existing structures of a printer when a model is not printed or during model printing, so as to accurately determine whether the remaining printing material is enough to complete the printing of the entire model to be printed, which is beneficial to promote a user to add the printing material when the printing material in the resin vat is insufficient, such that the problem of printing delay or interruption caused by not adding printing materials in time is addressed, and the operation efficiency is greatly increased. Moreover, since a body of a measurement structure is an existing structure in the printer, compared with a solution of additionally carrying a measurement probe for the liquid level of the printing material, etc., the complexity of the printer and the measurement structure can be reduced, the stability of the system is improved, and the apparatus cost can be reduced.

### BRIEF DESCRIPTION OF THE DRAWINGS

In order to more clearly describe the technical solutions in the embodiments of the present invention or the prior art, the drawings necessary for describing the embodiments or the prior art will be briefly described below. Apparently, the drawings in the description below merely show some of the embodiments of the present invention, and those of ordinary skill in the art would have obtained other drawings from the provided drawings without involving any inventive effort.
FIG. 1 is a flowchart of a remaining printing material measurement method according to an embodiment of the present invention;
FIG. 2 is a diagram of principles of a remaining printing material measurement method according to an embodiment of the present invention;
FIG. 3 is a schematic diagram of an implementation of a remaining printing material measurement method according to an embodiment of the present invention;
FIG. 4 is a schematic diagram of another implementation of a remaining printing material measurement method according to an embodiment of the present invention; and

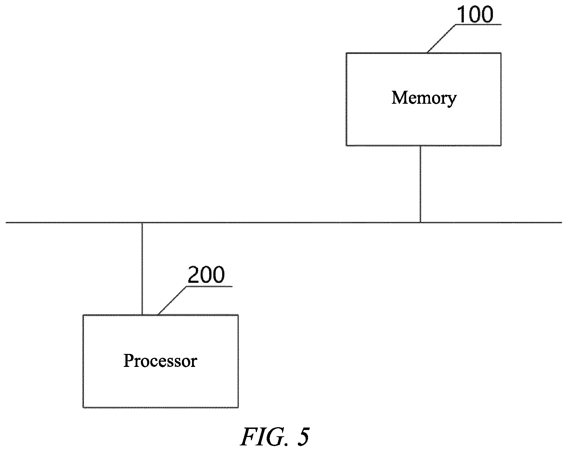

FIG. 5 is a structural block view of an additive manufacturing apparatus according to an embodiment of the present invention.

### List of reference numerals:

1-resin vat; 2-printing platform; 3-first target position; 4-first preset plane; 5-second preset plane; 6-second target position; 7-cantilever; 8-force transducer; 100-memory; 200-processor.

### DETAILED DESCRIPTION OF THE EMBODIMENTS

The technical solutions of embodiments of the present invention will be described below clearly and comprehensively in conjunction with accompanying drawings of the embodiments of the present invention. Apparently, the embodiments described are merely some embodiments rather than all of the embodiments of the present invention. All other embodiments obtained by those of ordinary skill in the art on the basis of the embodiments of the present invention without involving any inventive effort fall within the scope of protection of the present invention.

In order to enable those skilled in the art to better understand the solutions of the present invention, the present invention is described in further detail below with reference to the accompanying drawings and particular implementations.

A remaining printing material measurement method provided in the embodiments of the present invention is applied to an additive manufacturing apparatus and is used for measuring remaining printing material in a resin vat 1 of the additive manufacturing apparatus.

The additive manufacturing apparatus of the present invention is a light curing 3D printing apparatus. The apparatus includes a resin vat 1 and a printing platform 2. During printing, the printing platform 2 can move relative to the resin vat 1. In a particular implementation, the printing platform 2 is vertically movable relative to the resin vat 1. It should be noted that operating principles of light curing 3D printing are as follows. A model to be printed is sliced into plane layers, and with control and use of liquid crystal display (LCD) imaging principles, image signals are provided by a computer program under drive of a computer and a display screen circuit to display a selective transparent area on a liquid crystal screen. Ultraviolet light is transmitted through the transparent area and irradiates a printing material in the resin vat 1 for curing by exposure. After a layer is cured, the cured portion is lifted by the printing platform 2, and then the printing platform is lowered again. A thin layer between the model and a release film is exposed to the ultraviolet light and cured again, and in this case, the model and the release film are cured and bonded together. The model is lifted by the printing platform 2, and the model is separated from the release film under the action of a force, so as to print the entire model.

In the above printing process, in order to determine the current remaining printing material in the resin vat 1 before printing to determine whether the current remaining printing material is enough to complete the printing of the entire model to be printed, or in order to determine the remaining printing material in the resin vat 1 during printing to determine whether the current remaining printing material is enough to complete the printing of the rest of the model to be printed, so as to avoid printing delay or interruption caused by not adding printing materials in time, it is necessary to provide a remaining printing material measurement method.

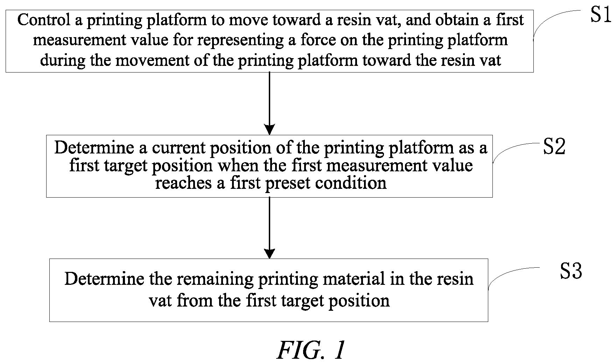

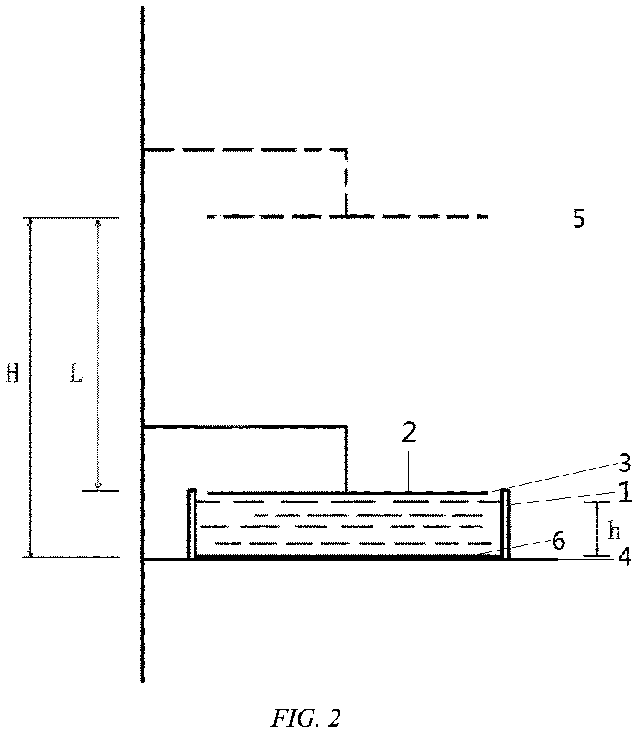

Specifically, with reference to FIGS. 1 and 2, the remaining printing material measurement method according to the present invention includes:
step S1, during which a printing platform is controlled to move towards a resin vat, and a first measurement value for representing a force on the printing platform is obtained during the movement of the printing platform towards the resin vat;
step S2, during which a current position of the printing platform is determined as a first target position when the first measurement value reaches a first preset condition; and
step S3, during which remaining printing material in the resin vat is determined from the first target position.

It should be noted that in step S 1, the first measurement value for representing a force on the printing platform 2 may be a force value for representing a force on the printing platform 2, a deformation value for representing a force on the printing platform 2, a current value for representing a force on the printing platform 2, or another value for representing a force on the printing platform 2, which is not specifically limited in the present invention.

In some embodiments, the first measurement value is a force measurement value measured by a force transducer 8 mounted on the printing platform 2 or a cantilever 7 of the printing platform 2. For example, the force transducer 8 is mounted on the cantilever 7 of the printing platform 2, and the force transducer 8 is a resistance strain transducer. Of course, other transducers may also be used. The resistance strain transducer is a force transducer that converts the deformation of the cantilever 7 caused by the force on the printing platform 2 into a corresponding resistance value. The resistance strain transducer is electrically connected to a control system of the additive manufacturing apparatus. For example, the resistance strain transducer includes a strain gauge and a signal processing circuit. The signal processing circuit is configured to process a signal sensed by the strain gauge.

In some embodiments, the first measurement value is a measurement value obtained by measuring a current of a drive motor of the printing platform 2. For example, the first measurement value is a current measurement value obtained by measuring a drive circuit of the drive motor by a current measurement module arranged in the drive circuit of the drive motor. In this way, the current of the drive motor of the printing platform 2 is measured to reflect a force condition of the printing platform 2. It may be understood that the current can reflect the magnitude of an output force of the motor, and the output force of the motor generally corresponds to a force condition of the printing platform 2, such that the force condition of the printing platform 2 can be measured more accurately.

In some embodiments, the first measurement value is a measurement value obtained by measuring a torque between the drive motor of the printing platform 2 and a lead screw by a torque sensor. It may be understood that the torque sensor can measure the output force of the drive motor, and the magnitude of the output force of the drive motor generally corresponds to the force condition of the printing platform 2, such that the force condition of the printing platform 2 can be measured more accurately.

In some embodiments, the first measurement value may be a measurement value obtained by measuring a distance between the printing platform 2 and a liquid surface of the printing material by a photoelectric sensor. It may be understood that the photoelectric sensor can determine the distance between the printing platform 2 and a liquid surface of the printing material in the resin vat by emitting a photoelectric signal to the liquid surface of the printing material and receiving a photoelectric signal reflected back by the liquid surface of the printing material. If the distance is less than a preset distance, that is, the first measurement value reaches a first threshold, the current position of the printing platform 2 is determined as a first target position 3.

In some other embodiments, the first measurement value may also be obtained by a sensor such as a speed sensor, an acceleration sensor, or a displacement sensor, as long as the obtained first measurement value is used for representing the force on the printing platform 2. For example, the force on the printing platform 2 is represented by an acceleration of a component associated with the printing platform, the force on the printing platform 2 is represented by a speed of the component associated with the printing platform, and the force on the printing platform 2 is represented by the displacement of the component associated with the printing platform.

In some particular embodiments, the force on the printing platform 2 is measured to obtain the first force measurement value. Moreover, as illustrated in the above embodiments, the current of the drive motor of the printing platform 2 can be measured to obtain a current measurement value, and the first force measurement value can be calibrated by using the current measurement value. Alternatively, the torque between the drive motor of the printing platform 2 and the lead screw can be measured to obtain a torque measurement value, and the first force measurement value may be calibrated by using the torque measurement value. Alternatively, the first force measurement value is calibrated by using a measurement value obtained by measuring the distance between the printing platform 2 and the liquid surface of the printing material by the photoelectric sensor. That is, different types of first measurement values can be calibrated with each other, so as to output a more accurate first measurement value, and to improve the measurement accuracy of the remaining printing material.

In some embodiments, the printing material is resin or other printing materials. In a particular implementation, the printing material can be liquid photosensitive resin. For example, the printing material is a liquid printing material, a powdered printing material, or a solid printing material, etc.

In step S1, controlling the printing platform to move towards the resin vat includes:
obtaining the type of the printing material in the resin vat, and determining a movement speed of the printing platform towards the resin vat according to the type of the printing material; and
controlling the printing platform to move towards the resin vat at the movement speed.

It may be understood that, in an example in which the printing material is resin, the viscosities of different types of resins are likely to be different. Thus, for different types of resins, the movement speed of the printing platform 2 towards the resin vat 1 can be determined depending on the type of resin. For example, the additive manufacturing apparatus may be provided with a resin viscometer. The viscosity of the resin may be measured by the resin viscometer and fed back to a primary controller, so as to control the printing platform 2 to move towards the resin vat 1 at a movement speed corresponding to the type of the resin. Still alternatively, the type and/or the viscosity of the resin used may be obtained from a model slice file. For another example, the type of the resin selected by the user may be obtained by means of an interactive screen. For another example, the type and/or the viscosity of the resin used may be obtained by reading a label of a resin bottle.

In some embodiments, the movement speed of the printing platform 2 may be properly reduced for a resin having a high viscosity. Otherwise, if the movement speed of the printing platform 2 is set to be high, the platform is subject to a large force when impacting a liquid surface of the resin at a high movement speed, and the excessively large force applied to the platform may cause distortion of the first measurement value. The measurement accuracy of the first measurement value should be ensured. It may be understood that the movement speed of the printing platform 2 is positively related to the force applied to the printing platform when the printing platform 2 impacts the liquid surface of the resin. Moreover, the viscosity of the resin is also positively related to the force applied to the printing platform when the printing platform 2 impacts the liquid surface of the resin.

In some embodiments, the movement speed of the printing platform 2 may be properly increased for a resin having a low viscosity. Otherwise, if the movement speed of the printing platform 2 is set to be low, the platform is subject to a small force when impacting the liquid surface of the resin at a low movement speed, and the too small force applied to the platform may be difficult to identify, resulting in poor identification accuracy of the first measurement value. Accordingly, the measurement accuracy of the first measurement value can be improved by properly increasing the movement speed of the printing platform 2 for the resin having a low viscosity.

In some implementations, the first measurement value is measured by the force transducer 8. The measurement accuracy of the force transducer 8 is also optional. For example, suitable measurement accuracy may be selected based on parameters such as the type of a resin (or the viscosity of a resin), a bottom area of a model currently adhering to the printing platform 2, etc. Of course, a user may also customize the measurement accuracy of the force transducer 8, provided that the measurement accuracy of the first measurement value can be guaranteed, which is not specifically limited in this embodiment.

In some embodiments, the remaining printing material measurement method further includes, posterior to controlling the printing platform to move towards the resin vat and obtaining the first measurement value for representing a force on the printing platform during the movement of the printing platform towards the resin vat:
controlling the printing platform to stop moving towards the resin vat if the first measurement value still does not reach the first threshold when the distance between the printing platform and a plane in which the resin vat is placed is less than a preset limit distance;
increasing the movement speed of the printing platform, controlling the printing platform to be lifted and then to move towards the resin vat again, and measuring the first measurement value again during the movement.

In other words, if the first measurement value still does not reach the first threshold when the distance between the printing platform 2 and the plane in which the resin vat 1 is placed is less than a preset limit distance, current printing is stopped, that is, the printing platform 2 is controlled to stop moving towards the resin vat 1, the movement speed of the printing platform 2 is increased again, the printing platform 2 is controlled to be lifted and then move towards the resin vat 1 at the increased movement speed, and the first measurement value is measured again during the movement. In this way, a success rate of identifying the first target position can be increased, that is, a success rate of identifying the liquid surface of the printing material in the resin vat can be increased.

In this embodiment, if the first measurement value reaches the first threshold before the distance between the printing platform 2 and the plane in which the resin vat 1 is placed is less than the preset limit distance during current printing, it is indicated that the target position is successfully detected in this detection. In this case, the remaining printing material is calculated for the current printing, and parameters involved in this success are recorded for reporting to a background and updating a mapping relationship between the type of the resin and the movement speed of the printing platform 2. The mapping relationship may be stored in an apparatus, or the mapping relationship may be uploaded to a remote device such as a cloud server, so as to achieve big data analysis optimization between the type of the resin and the movement speed of the printing platform 2.

In step S2, determining a current position of the printing platform as a first target position when the first measurement value reaches a first preset condition includes:
determining the current position of the printing platform as the first target position when the first measurement value reaches a first threshold; or
determining the current position of the printing platform as the first target position when the first measurement value is within a first value range; or
determining a curve of the first measurement value as function of time during the movement of the printing platform towards the resin vat when the first measurement value reaches a third threshold; and determining the current position of the printing platform as the first target position when a curvature of the curve is greater than a preset curvature.

Specifically, the third threshold may be the same as the first threshold. Alternatively, the third threshold may be a minimum value or a maximum value of the first value range, and the first value range is a value range including the first threshold.

It should be noted that in the step of determining the current position of the printing platform as the first target position 3 when the first measurement value reaches a first threshold, the first threshold is a threshold that the first measurement value will reach when the printing platform impacts the liquid surface of the resin. When the first measurement value reaches the first threshold, it can be indicated that the printing platform impacts the liquid surface of the resin. The first threshold is within the first value range. For example, the first threshold may be a median of the first value range. For example, the first threshold is value A, and the first value range may be A * (1 ± 10%). Alternatively, the first value range may also be another value range including the first threshold. The first threshold may be calculated based on a motion model of the printing platform impacting the liquid surface of the resin, and alternatively, the first threshold may be determined by analyzing an experimental result of the printing platform impacting the liquid surface of the resin.

Moreover, in the embodiment of the present disclosure, the first measurement value is determined and the current position of the printing platform 2 is determined as the first target position 3 when the first measurement value reaches the first threshold. The first target position 3 should be a position where the printing platform 2 impacts the liquid surface of the resin in the resin vat 1, that is, a pressure applied to the printing platform 2 increases instantaneously upon the printing platform 2 impacting the liquid surface of the resin. A curvature corresponding to the current first measurement value is obtained based on the curve of the first measurement value as function of time. A larger curvature indicates more reliable authenticity of the printing platform 2 impacting the liquid surface of the resin in the resin vat 1 when the first measurement value reaches the first threshold.

It may be understood that because an incorrect determination may be made during the movement of the printing platform 2 towards the resin vat 1 containing resin, the case of the printing platform 2 not impacting the liquid surface of the resin in the resin vat 1 when the first measurement value reaches the first threshold may occur. For example, when the printing platform 2 is subject to a large air resistance during downward movement, the first measurement value may also be changed. Therefore, the embodiments of the present application need to timely provide a method capable of preventing effects of the air resistance or other interference resistances (that is, when the first measurement value reaches the third threshold, a curve of the first measurement value as function of time during the movement of the printing platform towards the resin vat is determined, and when the curvature is greater than a preset curvature, the current position of the printing platform is determined as the first target position 3), so as to limit the reason for a change of the first measurement value to the fact that the printing platform 2 impacts the liquid surface of the resin, which may greatly improve the measurement accuracy. It may be understood that the air resistance or other interference resistances affecting the first measurement value is generally less abrupt than the impact on the liquid surface of the resin influence in terms of effects on the measurement value. For example, the air resistance has a continuous influence with less abrupt changes. For another example, it is assumed that a heavy object is hung from the printing platform before printing, the heavy object also has a continuous influence on the first measurement value, with less abrupt changes.

Of course, other methods may also be employed to eliminate the incorrect determination as described above, so as to improve the measurement accuracy. For example, when the first measurement value changes to reach the first preset condition, a position where the first measurement value is located is recorded, the printing platform 2 is controlled to stop, and it is determined whether the decrease in the first measurement value is greater than a preset decrease. If the decrease in the first measurement value is greater than the preset decrease, that is, the first measurement value substantially decreases, it is indicated that the position where the first measurement value changes instantaneously at the beginning is the target position. If not so, it is indicated that the printing platform 2 has not yet reached the target position.

In a particular implementation, the first target position 3 is a position known by means of feedback of a force measurement value during the movement of the printing platform 2 towards the resin vat 1. The position may be recorded in the form of spatial position coordinates, height position coordinates, or a stroke position of a motor. When the printing platform 2 reaches the position, the first measurement value changes and reaches the first threshold. The reason for the change of the first measurement value is that the printing platform 2 collides with the printing material in the resin vat 1 during the downward movement.

It should be noted that the first measurement value reaching the first threshold means that the first measurement value may be greater than or equal to the first threshold, or the first measurement value may be less than or equal to the first threshold. When the change of the first measurement value is positively related to the change of the force on the printing platform 2, the first measurement value reaching the first threshold means that the first measurement value is greater than or equal to the first threshold. When the change of the first measurement value is negatively related to the change of the force on the printing platform 2, the first measurement value reaching the first threshold means that the first measurement value is less than or equal to the first threshold.

Similarly, the first measurement value reaching the third threshold means that the first measurement value may be greater than or equal to the third threshold, or the first measurement value may be less than or equal to the third threshold. When the change of the first measurement value is positively related to the change of the force on the printing platform 2, the first measurement value reaching the third threshold means that the first measurement value is greater than or equal to the third threshold, in which the third threshold may be a minimum value of the first value range, or the third threshold may be the first threshold. When the change of the first measurement value is negatively related to the change of the force on the printing platform 2, the first measurement value reaching the third threshold means that the first measurement value is less than or equal to the third threshold, in which the third threshold may be a maximum value of the first value range, or the third threshold may be the first threshold.

In some embodiments, the first measurement value includes a first force measurement value. The step of obtaining a first measurement value for representing a force on the printing platform includes:
measuring the force on the printing platform to obtain the first force measurement value.

Determining a current position of the printing platform as a first target position when the first measurement value reaches a first preset condition includes:
determining the current position of the printing platform as the first target position when the first force measurement value reaches a first threshold.

The remaining printing material measurement method further includes, posterior to measuring the force on the printing platform to obtain the first force measurement value:
obtaining a current model printing progress of the additive manufacturing apparatus if part of the model to be printed has been printed by the additive manufacturing apparatus;
determining a bottom area of a model currently adhering to the printing platform from the current model printing progress and slice information of the model to be printed;
determining a first threshold corresponding to the bottom area of the model currently adhering to the printing platform, the first threshold being positively related to the bottom area of the model currently adhering to the printing platform; and
using a default threshold as the first threshold if no part of the model to be printed is printed by the additive manufacturing apparatus.

In some embodiments, in the step of determining the current position of the printing platform as the first target position 3 when the first force measurement value reaches a first threshold, determining the first threshold includes two cases. The first case is that part of the model to be printed has been printed by the additive manufacturing apparatus, and in this case, the first threshold is related to the bottom area of the model currently adhering to the printing platform 2. The second case is that no part of the model to be printed is printed by the additive manufacturing apparatus, and in this case, the first threshold is the default threshold.

Specifically, the remaining printing material measurement method further includes, posterior to measuring the force on the printing platform to obtain the first force measurement value:
obtaining a current model printing progress of the additive manufacturing apparatus if part of the model to be printed has been printed by the additive manufacturing apparatus;
determining a bottom area of a model currently adhering to the printing platform from the current model printing progress and slice information of the model to be printed; determining a first threshold corresponding to the bottom area of the model currently adhering to the printing platform, the first threshold being positively related to the bottom area of the model currently adhering to the printing platform; and using a default threshold as the first threshold if no part of the model to be printed is printed by the additive manufacturing apparatus.

In step S3, determining remaining printing material in the resin vat include at least two meanings, one is to directly calculate the remaining printing material in the resin vat, and the other one is to directly determine whether the target distance is less than the preset distance without calculating the remaining printing material. If less, it is determined that the remaining printing material falls within a pre-warning remaining printing material range; and if not, it is determined that the remaining printing material does not fall within the pre-warning remaining printing material range, and is in a safe remaining printing material range. Falling within the safe remaining printing material range means that the remaining printing material is sufficient. Being within the pre-warning remaining printing material range means that the remaining printing material is insufficient. Likewise, determining remaining printing material in the resin vat in the step of determining remaining printing material in the resin vat from the target distance also has at least two meanings as described above.

It may be understood that the first target position 3 in the above embodiments may be recorded in the form of spatial position coordinates, height position coordinates, and a stroke position of the motor. Based on this, when the first target position 3 is recorded in different forms, there are different corresponding calculation methods for determining the remaining printing material.

Specifically, in some implementations, determining remaining printing material in the resin vat from the first target position includes: determining a target distance between the first target position and a first preset plane from the first target position, and determining the remaining printing material in the resin vat from the target distance. The first preset plane is a plane in which the bottom of the resin vat is located.

In this way, a target distance between the first target position and a first preset plane can be determined directly according to the first target position, and the remaining printing material in the resin vat can be determined according to the target distance, so as to the remaining printing material is directly and accurately calculated by means of determining the target distance between the first target position and the first preset plane from the first target position and determining the remaining printing material in the resin vat from the target distance.

In a particular implementation, a distance is calculated by means of coordinates of two positions, or by means of a motor stroke between motor stroke positions corresponding to two positions. For example, the target distance may be calculated directly by means of the coordinates (for example, height coordinates or spatial coordinates) of the first target position 3 and the coordinates (for example, height coordinates or spatial coordinates) of the position of the first preset plane, or may be calculated by means of a motor stroke between two points.

In some other implementations, determining remaining printing material in the resin vat from the first target position includes: determining whether the first target position is within a preset position range from the first target position and the preset position range; determining that the remaining printing material in the resin vat is insufficient when the first target position is within the preset position range; and determining that the remaining printing material in the resin vat is sufficient when the first target position is beyond the preset position range.

In this way, whether the remaining printing material in the resin vat is sufficient can be determined directly by means of comparison between the first target position and the preset position range with no need for calculating the target distance, which can reduce the calculation amount of the apparatus, reduce power consumption, increase the operation efficiency, and determine whether the remaining printing material in the resin vat is sufficient in a simplified manner.

Determining a target distance between the first target position and a first preset plane from the first target position includes: directly calculating the target distance based on the first target position and the position of the first preset plane.

In a particular implementation, the target distance may be calculated directly by means of the coordinates (for example, height coordinates or spatial coordinates) of the first target position 3 and the coordinates (for example, height coordinates or spatial coordinates) of the position of the first preset plane, or may be calculated by means of a motor stroke between two points. Calculating the distance by means of the motor stroke between two points includes: recording a first motor stroke position when the printing platform reaches the first target position, recording a second motor stroke position when the printing platform reaches the first preset plane (or obtaining a pre-stored second motor stroke position when the printing platform reaches the first preset plane), and calculating the motor stroke distance between the first motor stroke position and the second motor stroke position.

Alternatively, determining a target distance between the first target position and a first preset plane from the first target position includes: obtaining the distance between the first target position and a second preset plane in the case of the first target position being located between the first preset plane and the second preset plane or in the case of the first preset plane being located between the first target position and the second preset plane, so as to obtain a first distance, and taking the difference between the first distance and a preset distance as the target distance. The preset distance is the distance between the first preset plane and the second preset plane, and the second preset plane is any plane parallel to the first preset plane.

In a particular implementation, in the case of the first target position being located between the first preset plane and the second preset plane or in the case of the first preset plane being located between the first target position and the second preset plane, the first target position is obtained during lowering the printing platform, the motor stroke position at the first target position is recorded, the pre-stored motor stroke position corresponding to the second preset plane is obtained, and the motor stroke distance between the first target position and the second preset plane is then obtained to obtain the first distance. The difference between the first distance and the preset distance is taken as the target distance. The preset distance may be obtained by controlling the printing platform to be lowered from the second preset plane to the first preset plane and by means of a motor stroke distance between the first preset plane and the second preset plane. The second preset plane may be parallel to and located above the first preset plane. Alternatively, the preset distance may be pre-stored in the apparatus.

In this way, the target distance between the first target position and the first preset plane is obtained by introducing the second preset plane and making a comparison. Based on this, in combination with calculating the distance by means of the motor stroke between the motor stroke positions corresponding to two positions, the level of the remaining printing material can be calculated without recording the height coordinates of the positions, which can further reduce components required for measurement. Instead, existing motor components of the printing platform are reused, such that the system operation stability can be improved, and the apparatus cost can be reduced.

Alternatively, determining a target distance between the first target position and a first preset plane from the first target position includes: obtaining a distance between the first target position and the second preset plane in the case of the second preset plane being located between the first target position and the first preset plane, so as to obtain a second distance, and taking a sum of the second distance and the preset distance as the target distance. The preset distance is the distance between the first preset plane and the second preset plane. The second preset plane is any plane parallel to the first preset plane.

In this way, the target distance between the first target position and the first preset plane is obtained by introducing the second preset plane and making a comparison. Based on this, in combination with calculating the distance by means of the motor stroke between the motor stroke positions corresponding to two positions, the level of the remaining printing material can be calculated without recording the height coordinates of the positions, which can further reduce components required for measurement. Instead, the motor components and a stroke recording module of the printing platform that are necessary for the apparatus to control the movement of the printing platform are reused, which can improve the operation stability of the system and reduce the apparatus cost.

In some implementations, the second preset plane is any plane parallel to the first preset plane. The second preset plane may be located above the first preset plane or below the first preset plane. Of course, the second preset plane may also be the first preset plane, which is not specifically limited in this embodiment.

In any one of the embodiments of the present invention, the distance may be calculated directly by means of calculation of the coordinates of the two positions (for example, height coordinates or spatial coordinates), the distance may be calculated by means of the motor stroke between the motor stroke positions corresponding to the two positions, or the distance may be calculated in other ways. For example, during printing, the control system controls the motor to rotate, and the motor drives the printing platform 2 to move vertically by means of a ball screw assembly. Therefore, in some implementations, the distance between the two positions may be measured by means of a motor stroke, a grating ruler, a limit switch, etc. The positions mentioned above include the positions of the printing platform such as the first target position and the second target position, and also include the positions of the first preset plane, the second preset plane, etc. In a particular implementation, the position of each of the planes may also be obtained by the position of the printing platform when the printing platform moves to the plane.

In some implementations, the position of the first preset plane may be obtained by means of the printing platform 2 impacting a bottom surface of the resin vat 1. Specifically, the printing platform is controlled to move towards the resin vat, and a third measurement value for representing a force on the printing platform is obtained during the movement of the printing platform towards the resin vat. If the third measurement value is greater than or equal to a fourth threshold, a plane in which the printing platform is located at present is determined as the first preset plane. The fourth threshold is greater than the first threshold. In this way, the position of the printing platform 2 when the printing platform impacts the bottom surface of the resin vat 1 again can be identified by means of the fourth threshold corresponding to a force greater than the force impacting the printing material in the resin vat, that is, the plane in which the bottom of the resin vat is located, i.e., the first preset plane, is identified. In a particular implementation, the resin vat may be mounted on a floating platform, such that a movement space may be provided for the resin vat in a movement direction of the printing platform, so as to prevent a pressure of the printing platform from damaging the resin vat, the release film, or an exposure screen.

In some embodiments, determining a target distance between the first target position and a first preset plane from the first target position includes:
obtaining a distance between the first target position and a second preset plane in the case of the first target position being located between the first preset plane and the second preset plane, so as to obtain the first distance, and taking the difference between the first distance and the preset distance as the target distance, wherein the second preset plane is any plane above the resin vat.

Controlling the printing platform to move towards the resin vat includes:
controlling the printing platform to move from the second preset plane towards the resin vat.

That is, in this embodiment, with reference to FIG. 2, the remaining printing material measurement method includes.
controlling the printing platform 2 to move from the second preset plane 5 towards the resin vat 1, and obtaining a first measurement value for representing a force on the printing platform 2 during the movement of the printing platform 2 towards the resin vat 1, wherein the second preset plane 5 is any plane above the resin vat 1;
determining a current position of the printing platform 2 as a first target position 3 when the first measurement value reaches a first preset condition;
obtaining a distance between the first target position 3 and the second preset plane 5 to obtain the first distance, and taking the difference between the first distance and the preset distance as the target distance, wherein the preset distance is the distance between the first preset plane 4 and the second preset plane 5; and
determining remaining printing material in the resin vat from the target distance.

It should be noted herein that the second preset plane 5 is any plane located above the resin vat 1. Being above the resin vat 1 may refer to being above the highest position of the printing material that can be contained in the resin vat 1, that is, above the highest position of a liquid surface of resin that can be contained in the resin vat 1 when the printing material is resin, and it is possible to be above the highest portion of the entire resin vat 1, or above the position of the geometric center of the entire resin vat 1. Alternatively, in practical applications, being above the resin vat 1 may also refer to being above the position of a liquid surface during a previous measurement. Alternatively, being above the resin vat 1 may also refer to being above the release film of the resin vat 1. In this way, the second preset plane 5 is located above the resin vat 1, such that a space for the printing platform 2 to move downwards from the second preset plane 5 is provided, and the height of the liquid level of the printing material can be measured correspondingly.

In some embodiments, the preset distance may be a preset or stored preset distance, for example, when the second preset plane 5 is any plane located above the resin vat, an initial position of the printing platform 2 may be the highest limit position that the printing platform 2 can reach on its movement trajectory or any pre-stored position that is below the highest limit position and above the resin vat 1. Of course, for a particular process of obtaining the preset distance, reference may be made to a process of obtaining the first distance during the movement of the printing platform 2 from the second preset position towards the resin vat 1.

Specifically, in the case of the first target position being located between the first preset plane and the second preset plane, in the case of the first preset plane being located between the first target position and the second preset plane, or in the case of the second preset plane being located between the first target position and the first preset plane, the remaining printing material measurement method further includes, prior to determining the target distance between the first target position and the first preset plane from the first target position:
obtaining a pre-stored preset distance; or
controlling the printing platform to move to the second preset plane when the second preset plane is any plane above the resin vat;
controlling the printing platform to be pressed down from the second preset plane to the first preset plane, and measuring a measurement value for representing a force on the printing platform during pressing to obtain a second measurement value; and
determining a current position of the printing platform as a second target position when the second measurement value reaches a second preset condition, and taking a distance between the second target position and the second preset plane as the preset distance. The second preset condition is that the second measurement value reaches a second threshold, or the second measurement value is within a second value range; and the second threshold is within the second value range.

It should be noted that the particular process of obtaining the preset distance may be performed in the case of the resin vat 1 having been mounted/placed on the apparatus or the resin vat 1 that contains no printing material having been mounted/placed on the apparatus. In this case, the preset distance is the distance between the preset position 3 and the plane in which the resin vat 1 is placed. During printing, the printing platform 2 moves under the control of the motor. Specifically, the control system controls the motor to rotate, and the motor may drive the printing platform 2 to move vertically by means of a lead screw assembly. Therefore, the preset distance may be obtained by calculating the stroke of the motor, counting the pulses of the motor, or directly measuring the vertical displacement of the printing platform 2. After the preset distance is obtained, the obtained preset distance may be stored in the apparatus for subsequent reading, such that the accuracy of obtaining the preset distance can be guaranteed, and the problem of inaccurate pre-stored data of the preset distance caused by assembly errors of various devices can be avoided.

It may be understood that the determination of the preset distance consists in determining the current position of the printing platform 2 as the second target position 6 when the second measurement value reaches the second preset condition. That is to say, the determination of the preset distance and the first distance uses the first measurement value for representing the force on the printing platform 2. Therefore, the target distance may be obtained by comparing the preset distance with the first distance, with a measurement error of the first measurement value eliminated. The target distance may be used for representing the height of the liquid level of the printing material, that is, the height of the remaining printing material.

In some embodiments, the remaining printing material in the resin vat 1 may be determined by directly calculating the remaining printing material in the resin vat 1. The remaining printing material in the resin vat 1 may be calculated according to a volume calculation formula. That is, the remaining printing material in the resin vat 1 is obtained by a previously obtained bottom area of the resin vat 1 multiplied by the target distance. Alternatively, the remaining printing material may be directly obtained according to a mapping table having a mapping relationship between the height of the printing material in the resin vat 1 and the remaining printing material. In this mapping table, the target distance is used as the height of the printing material, and the remaining printing material mapped by the height of the printing material is used as the remaining printing material in the resin vat 1 that needs to be obtained.

It should be noted that the resin vat 1 may contain the printing material, or the resin vat 1 may contain no printing material, that is, the height of the printing material is zero. Specifically, when the printing material is liquid, the height of the printing material is the height of the liquid level of the printing material.

Specifically, determining remaining printing material in the resin vat from the first target position includes: determining a target distance between the first target position and a first preset plane from the first target position, and determining the remaining printing material in the resin vat from the target distance. The first preset plane is a plane in which the bottom of the resin vat is located. Determining remaining printing material in the resin vat from the target distance includes:
obtaining a bottom area of the resin vat, and calculating the remaining printing material in the resin vat according to a preset relational expression, wherein the preset relational expression is V = S × h, V is the remaining printing material in the resin vat, S is the bottom area of the resin vat, and h is the target distance; or
obtaining a preset mapping table, wherein the preset mapping table includes a mapping relationship between the height of the printing material and the remaining printing material in the resin vat, the target distance is used as the height of the printing material, and the remaining printing material mapped by the height of the printing material is used as the remaining printing material in the resin vat.

In the first calculation method described above, the calculation may be performed regardless of whether the shape of the resin vat 1 is regular or irregular. A bottom area corresponding to each model of the resin vat 1 having a regular shape and a bottom area of the resin vat 1 having an irregular shape may be pre-stored in the control system, and the calculation is performed according to the preset relational expression after the target distance is obtained. Of course, before printing, the bottom area of the resin vat 1 containing no resin may be scanned in real time by a camera arranged on the printing platform 2 for calculation.

In the second calculation method, the preset mapping table is a mapping table established based on a functional relationship between the height of the printing material and the remaining printing material. After the target distance (the height of the printing material) is obtained, the remaining printing material in the resin vat 1 that needs to be calculated may be obtained according to the remaining printing material corresponding to the height of the printing material in the mapping table.

In some embodiments, the remaining printing material measurement method further includes, posterior to determining the remaining printing material in the resin vat from the target distance:
calculating the amount of the printing material required for printing a model to be printed based on the volume of the model to be printed and the volume of part of the model that has been printed;
comparing the amount of the remaining printing material in the resin vat with the amount of the printing material required for printing the model to be printed, and determining whether the amount of the current remaining printing material in the resin vat reaches the amount of the printing material required for printing the rest of the model; and
if not, sending a signal indicative of material shortage.

It may be understood that according to the remaining printing material measurement method provided in the embodiments of the present invention, the measurement may involve at least two application scenarios, one is to measure the printing material required for printing the entire model to be printed if the model has not yet been printed, and the other one is to measure the printing material required for printing the rest of the model to be printed if at least part of the model has been printed.

In this way, it may be accurately determined whether the remaining printing material in the resin vat 1 is enough to complete the printing of the model to be printed by further comparing the remaining printing material in the resin vat 1 measured before printing or during printing with the amount of the printing material required for completing the printing of the model to be printed. If the current remaining printing material in the resin vat 1 is not enough to complete the printing of the model to be printed, it is necessary to prompt the user to add the material in time, in order to avoid printing delay or interruption caused by not adding the printing materials in time.

In some embodiments, an alarm may be arranged on the printing apparatus. When the current remaining printing material in the resin vat 1 is not enough to complete the printing of the model to be printed, a signal indicative of material shortage is sent in time. Upon that the signal being received by the control system, the alarm is controlled to send a warning to prompt the user to add the material.

As such, with the remaining printing material measurement method, it may be determined whether the current printing material in the resin vat 1 is enough to complete the printing of the entire model to be printed before printing, that is, when the current model is not printed; or it may be determined whether the remaining printing material in the resin vat 1 is enough to complete the printing of the rest of the model to be printed during printing, which is beneficial to promote the user to add the printing material when the printing material in the resin vat 1 is insufficient. In this way, the problem of printing delay or interruption caused by not adding printing materials in time may be addressed, and the operation efficiency is greatly increased.

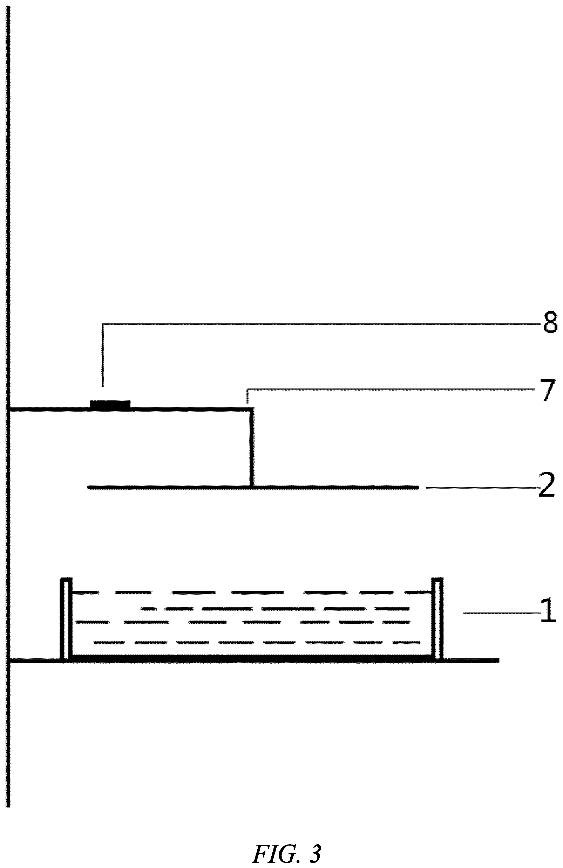

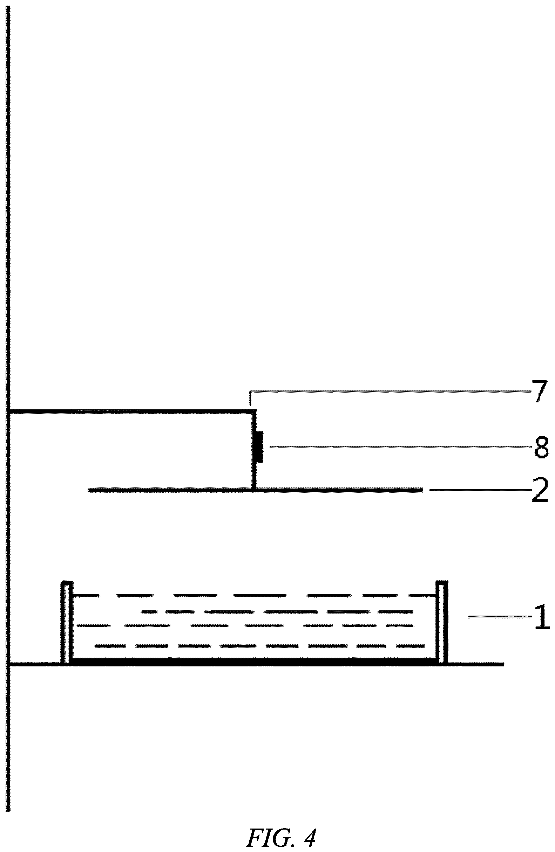

With reference to FIGS. 3 and 4, the additive manufacturing apparatus further includes a cantilever 7 and a motion module (a motor and a lead screw transmission assembly). The printing platform 2 is connected to the motion module by means of the cantilever 7. The motion module transmits motion and power to the printing platform 2, such that the printing platform 2 moves vertically. The force transducer 8 may be arranged on the printing platform 2 or on the cantilever 7. For example, the force transducer 8 may include a strain gauge arranged on the printing platform 2 or on the cantilever 7 in an adhesive manner.

It should be noted that in the specification, the relationship terms, such as first, second, etc., are used merely for distinguishing one entity from other entities and do not necessarily require or imply that the entities follow any such an actual relationship or order.

The remaining printing material measurement method, the additive manufacturing apparatus, and the readable storage medium provided by the present invention are introduced in detail above. The principles and implementations of the present invention set out with respect to particular examples, and the descriptions of the above embodiments are only for helping to understand the solutions and the core idea of the present invention. It should be noted that several improvements and modifications may be made to the present invention by those of ordinary skill in the art without departing from the principles of the present invention, and these improvements and modifications fall within the scope of protection of the present invention.

## Claims

1. A remaining printing material measurement method applied to an additive manufacturing apparatus, the additive manufacturing apparatus comprising a resin vat and a printing platform movable relative to the resin vat, the remaining printing material measurement method comprising:
controlling the printing platform to move towards the resin vat, and obtaining a first measurement value for representing a force on the printing platform during the movement of the printing platform towards the resin vat;
determining a current position of the printing platform as a first target position when the first measurement value reaches a first preset condition; and
determining a remaining printing material in the resin vat from the first target position.

2. The remaining printing material measurement method of claim 1, wherein determining the remaining printing material in the resin vat from the first target position comprises:
determining a target distance between the first target position and a first preset plane from the first target position, and determining the remaining printing material in the resin vat from the target distance, wherein the first preset plane is a plane located in a bottom of the resin vat; or
determining whether the first target position is within a preset position range from the first target position and the preset position range; determining the remaining printing material in the resin vat to be insufficient when the first target position is within the preset position range; and determining the remaining printing material in the resin vat to be sufficient when the first target position is beyond the preset position range.

3. The remaining printing material measurement method of claim 2, wherein the distance is calculated by coordinates of two positions, or by a motor stroke between motor stroke positions corresponding to the two positions; and
determining the target distance between the first target position and the first preset plane from the first target position comprises:
directly calculating the target distance from the first target position and a position of the first preset plane; or
obtaining a distance between the first target position and a second preset plane in the case of the first target position being located between the first preset plane and the second preset plane or in the case of the first preset plane being located between the first target position and the second preset plane, so as to obtain a first distance, and taking a difference between the first distance and a preset distance as the target distance, wherein the preset distance is a distance between the first preset plane and the second preset plane, and the second preset plane is any plane parallel to the first preset plane.

4. The remaining printing material measurement method of claim 3, wherein determining the target distance between the first target position and the first preset plane from the first target position further comprises:
obtaining the distance between the first target position and the second preset plane when the second preset plane is located between the first target position and the first preset plane, so as to obtain a second distance, and using a sum of the second distance and the preset distance as the target distance, wherein the preset distance is the distance between the first preset plane and the second preset plane, and the second preset plane is any plane parallel to the first preset plane.

5. The remaining printing material measurement method of claim 3, wherein determining the target distance between the first target position and the first preset plane from the first target position further comprises:
obtaining the distance between the first target position and the second preset plane in the case of the first target position being located between the first preset plane and the second preset plane, so as to obtain the first distance, and taking the difference between the first distance and the preset distance as the target distance, wherein the second preset plane is any plane above the resin vat; and
controlling the printing platform to move towards the resin vat comprises:
controlling the printing platform to move from the second preset plane towards the resin vat.

6. The remaining printing material measurement method of claim 3, wherein in the case of the first target position being located between the first preset plane and the second preset plane, or in the case of the first preset plane being located between the first target position and the second preset plane, or in the case of the second preset plane being located between the first target position and the first preset plane,
the remaining printing material measurement method further comprises,:
obtaining a pre-stored preset distance; or
controlling the printing platform to move to the second preset plane when the second preset plane is any plane above the resin vat;
controlling the printing platform to be pressed down from the second preset plane to the first preset plane, and measuring a measurement value for representing a force on the printing platform during pressing to obtain a second measurement value; and
determining a current position of the printing platform as a second target position when the second measurement value reaches a second preset condition, and taking a distance between the second target position and the second preset plane as the preset distance; wherein the second preset condition is that the second measurement value reaches a second threshold, or the second measurement value is within a second value range; and the second threshold is within the second value range.

7. The remaining printing material measurement method of claim 2, wherein determining the remaining printing material in the resin vat from the first target position comprises: determining the target distance between the first target position and the first preset plane from the first target position, and determining the remaining printing material in the resin vat from the target distance, wherein the first preset plane is the plane located in the bottom of the resin vat;
determining the remaining printing material in the resin vat from the target distance comprises:
obtaining a bottom area of the resin vat, and calculating the remaining printing material in the resin vat according to a preset relational expression, the preset relational expression is V = S × h, wherein V is the remaining printing material in the resin vat, S is the bottom area of the resin vat, and h is the target distance; or
obtaining a preset mapping table, wherein the preset mapping table comprises a mapping relationship between a height of a printing material and the remaining printing material in the resin vat, the target distance is the height of the printing material, and the remaining printing material mapped by the height of the printing material is the remaining printing material in the resin vat.

8. The remaining printing material measurement method of claim 7, wherein the remaining printing material measurement method further comprises:
calculating an amount of the printing material required for printing a model to be printed based on a volume of the model to be printed and a volume of part of the model that has been printed; and
comparing an amount of the remaining printing material in the resin vat with the amount of the printing material required for printing the model to be printed, and determining whether the amount of the current remaining printing material in the resin vat reaches the amount of the printing material required for printing the model to be printed.

9. The remaining printing material measurement method of any one of claims 1-8, wherein when the first measurement value reaches the first preset condition, determining the current position of the printing platform as the first target position comprises:
determining the current position of the printing platform as the first target position when the first measurement value reaches a first threshold; or
determining the current position of the printing platform as the first target position when the first measurement value is within a first value range; or
determining a curve of the first measurement value as function of time during the movement of the printing platform towards the resin vat when the first measurement value reaches a third threshold; and determining the current position of the printing platform as the first target position when a curvature of the curve is greater than a preset curvature.

10. The remaining printing material measurement method of claim 9, wherein the first measurement value comprises a first force measurement value;
obtaining the first measurement value for representing the force on the printing platform comprises:
measuring the force on the printing platform to obtain the first force measurement value;
determining the current position of the printing platform as the first target position when the first measurement value reaches the first preset condition comprises:
determining the current position of the printing platform as the first target position when the first force measurement value reaches the first threshold; and
the remaining printing material measurement method further comprises:
obtaining a current model printing progress of the additive manufacturing apparatus if part of the model to be printed has been printed by the additive manufacturing apparatus;
determining a bottom area of a model currently adhering to the printing platform from the current model printing progress and slice information of the model to be printed;
determining the first threshold corresponding to the bottom area of the currently adhering model, wherein the first threshold is positively correlated with the bottom area of the currently adhering model.

11. The remaining printing material measurement method of any one of claims 1-8, wherein controlling the printing platform to move towards the resin vat comprises:
obtaining a type of the printing material in the resin vat, and determining a movement speed of the printing platform towards the resin vat according to the type of the printing material; and
controlling the printing platform to move towards the resin vat at the movement speed.

12. The remaining printing material measurement method of any one of claims 1-8, wherein the remaining printing material measurement method further comprises:
controlling the printing platform to stop moving towards the resin vat if the first measurement value still does not reach the first threshold when a distance between the printing platform and a plane in which the resin vat is placed is less than a preset limit distance; and
increasing the movement speed of the printing platform, controlling the printing platform to be lifted and then to move towards the resin vat again, and measuring the first measurement value again during the movement.

13. An additive manufacturing apparatus, comprising:
a memory configured to store a computer program; and
a processor configured to, when executing the computer program, carry out steps of the remaining printing material measurement method of any one of claims 1-12.

14. A readable storage medium storing a computer program, wherein the computer program, when being executed by a processor, carries out the steps of the remaining printing material measurement method of any one of claims 1-12.
